# EUROPEAN PATENT APPLICATION

(11) **EP 1 388 978 A1**
(43) Date of publication of application: **11.02.2004**
(21) Application number: 02102573.9
(22) Date of filing: 13.11.2002
(51) Int. Cl.: H04L 12/46, H04L 12/28

(54) **Multi Protocol Label Switching Virtual Private Network gateway-based networking method**

(30) Priority: 05.08.2002 CN 02125817
(71) Applicant: Huawei Technologies Co., Ltd., Nanshan District, Shenzhen 518057 (CN)
(72) Inventor: Xue, Guofengc/o Cabinet Ch. Schmit et Associés, 95000 Cergy (FR)
(74) Representative: Schmit, Christian Norbert Marie

(57) **Abstract**

The present invention discloses a Multi Protocol Label Switching Virtual Private Network (MPLS VPN) gateway-based network method comprising: set one or more Multi Protocol Label Switching Virtual Private Network (MPLS VPN) gateways between a local Internet Service Provider (ISP) network and a superior Internet Service Provider (ISP) network/other Internet Service Provider (ISP) network, connect the Multi Protocol Label Switching Virtual Private Network (MPLS VPN) gateway with the local Internet Service Provider (ISP) network and the superior Internet Service Provider (ISP) network/other Internet Service Provider (ISP) network and at the same time connect the Multi Protocol Label Switching Virtual Private Network (MPLS VPN) gateway with Custom Edge Router (CE) devices in the subscribers' network according to the network topology, corresponding functions on the Multi Protocol Label Switching Virtual Private Network (MPLS VPN) gateway are put into service to provide Multi Protocol Label Switching Virtual Private Network (MPLS VPN) services; said scheme enables Internet Service Providers (ISP) to provide Multi Protocol Label Switching Virtual Private Network (MPLS VPN) services quickly with low investment and conventional network access capacity without modifying conventional network structure, which enhances competitive power and protect conventional investment.

## Description

### BACKGROUND OF THE INVENTION

### 1. Field of the Invention

The present invention relates to a networking method, particularly to a Multi Protocol Label Switching Virtual Private Network (MPLS VPN) gateway-based networking method.

### 2. Background of the Invention

Virtual Private Network (VPN) is a private network implemented with public networks (e.g., the network resources of Internet Service Protocol (ISP)) by an enterprise or a specific user group with the aim to satisfy their unique demand. Through a VPN, an enterprise or a specific user group can establish secure and reliable connections among to their branches, remote users, and business partners to transfer data at a low cost. Typically, a conventional VPN is IP-based, i.e., IP VPN, which simulates a dedicated WAN with IP network structure and is implemented through some IP tunnel mechanisms such as L2TP (2-layer tunnel protocol) etc. The VPN subscribers' data are transferred via tunnels. However, IP VPNs are difficult to configure, manage, and expand.

The Multi Protocol Label Switching (MPLS) technology combines IP technology on 3-layer and hardware switching technology on 2-layer, and utilizes a fixed length label as the unique sign for group transmission in a MPLS network. The technology integrates flexibility and expandability of IP technology and high performance, Quality of Service (QoS) ability, and traffic control ability of hardware switching technologies such as ATM (Asynchronous Transfer Mode). MPLS technology can not only solve a large amount of problems (such as QoS, Group Broadcast, and VPN support etc) in conventional networks, but also implement a lot of new functions such as traffic engineering, route display, etc. Therefore, MPLS is an ideal IP backbone network technology.

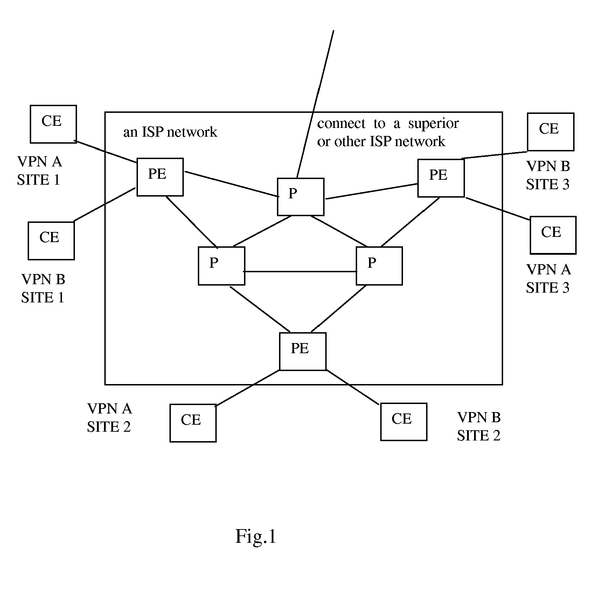

MPLS/BGP VPN is a solution to provide IP VPN services by using MPLS technology and Border Gateway Protocol (BGP) in public networks. Fig.1 shows a network topology of MPLS/BGP VPN, wherein the ISP network comprises P devices and PE devices.

P devices (Provider Routers) are mainly responsible for MPLS forwarding. PE devices (Provider Edge Routers) are the main bodies for providing MPLS/BGP VPN services. A PE device maintains an independent route table for each VPN subscriber's site and implements detection of VPN topologies and training of VPN internal routes through BGP. A CE device (Custom Edge Router) is a common router, which connects a VPN subscriber's site to a PE directly without any support to MPLS or VPN signaling and protocol.

A VPN user may have a plurality of sites, each of which may be a set of networks or sub-networks. A plurality of sites in a VPN constitute a 3-layer interconnection architecture through an ISP MPLS network, and the ISP NPLS network is responsible for routing and forwarding tasks among the sites.

However, ISPs are facing the following problems when providing MPLS/BGP VPN services: If the MPLS/BGP VPN is utilized as the network structure, the ISP network shall be composed of P devices and PE devices to completely support MPLS technology and have MPLS/BGP VPN ability. However, most conventional ISP networks employ diverse technologies (including router networking, ATM networking, or Ethernet networking), and many original devices in those networks have no MPLS ability. In the networks, there is no corresponding P devices or PE devices to implement MPLS/BGP VPN ability. If the ISPs want to provide MPLS/BGP VPN services, conventional networks should be upgraded and rebuilt to a large extent, which not only brings adverse effect to conventional services, but also requires vast investment to construct a large amount of PE devices to cover subscriber's networks. Said problems have become a severe restraint factor to the development and popularization of MPLS/BGP VPN services.

### SUMMARY OF THE INVENTION

The object of the present invention is to provide a MPLS VPN gateway-based networking method, with which ISPs can quickly deliver MPLS/BGP VPN services at the minimized cost without modifying the architecture of conventional ISP networks.

To attain said object, the MPLS VPN gateway-based networking method in the present invention comprises the following steps:
step 1: set one or more Multi Protocol Label Switching Virtual Private Network (MPLS VPN) gateways between a local ISP network and a superior ISP network/other ISP network;
step 2: connect the MPLS VPN gateway with the local ISP network and the superior ISP network/other ISP network and at the same time connect the MPLS VPN gateway with Custom Edge Router (CE) devices in the subscribers' network according to the network topology;
step 3: start corresponding functions on the MPLS VPN gateway to provide MPLS VPN services.

In step 1, said one or more MPLS VPN gateways are set according to the actual traffic of MPLS VPN services.

Said MPLS VPN gateway is connected to the local ISP network via IP, Local Area Network (LAN), Virtual Local Area Network (VLAN), or Asynchronous Transfer Mode Permanent Virtual Connection (ATM PVC).

The network connection between said MPLS VPN gateway and the superior ISP network/other network supports both IP and MPLS protocols.

The network connections between said MPLS VPN gateway and CE devices in the subscribers' network are through physical links.

The connections between said MPLS VPN gateway and CE devices in the subscribers' network can also be implemented in the following method: connect CE devices to original ISP network through physical links, and then connect the CE devices to said MPLS VPN via the original ISP network.

The connections between said MPLS VPN gateway and CE devices in the subscribers' network include physical direct connections and 2-layer or 3-layer connection implemented via the original ISP network.

According to the method of the present invention, a service plane of MPLS VPN is built by setting MPLS VPN gateways on the basis of original ISP networks, which implements the separation of network service plane from the data forwarding plane. In this way, original networks can be dedicated to subscriber access and data forwarding; while newly appended networks can be dedicated to provision of MPLS VPN services. Thus ISPs can take full advantage of the access ability of conventional networks to quickly deliver MPLS VPN services at a low cost without modifying conventional network structure, to enhance competitive power and protect conventional investment.

### BRIEF DESCRIPTION OF THE DRAWINGS

Fig.1 shows the network structure of a conventional MPLS VPN;
Fig.2 shows the network structure of the MPLS VPN constructed according to the method of the present invention;
Fig.3 is the flow chart of the embodiment of the method according to the present invention.

### DETAILED DESCRIPTION OF THE EMBODIMENT

The present invention is described in further detail referring to the following drawings wherein the BGP is used:

The method of the present invention, on the base of conventional ISP network, essentially utilizes a conventional ISP network as the data forwarding plane and overlap a service network on the plane to construct a network service plane, i.e., deploy less MPLS VPN gateways at the demarcation between the conventional ISP network and other ISP networks, to take full advantage of the access ability of the conventional ISP network to connect subscribers' network to the MPLS VPN gateway(s) through direct physical links, 2-layer or 3-layer connection method. The MPLS VPN gateways are responsible for processing all local MPLS/BGP VPN services and providing MPLS/BGP VPN service ability at a low cost without modifying conventional network structure, to quickly provide MPLS/BGP VPN services and enhance competitive power.

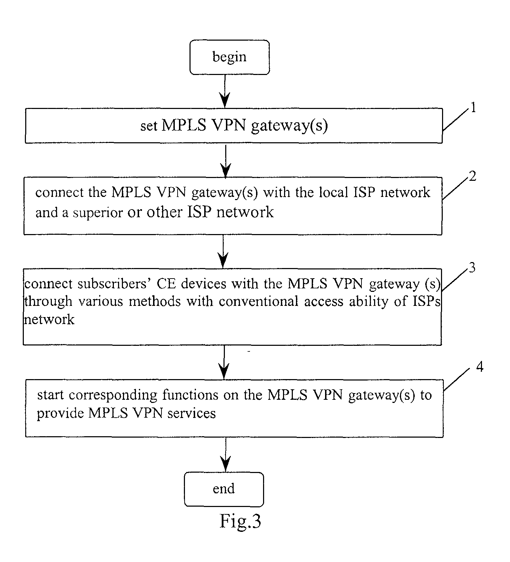

Fig.3 is the flow chart of embodiment of the method according to the present invention. According to step 1, one or more MPLS VPN gateways are set between the ISP network and a superior ISP network/other network. The exact number of MPLS VPN gateways set depends on the actual traffic of MPLS VPN services. After the MPLS VPN gateway(s) is (are) set, the MPLS VPN gateway(s) is (are) connected to the local ISP network and the superior ISP network/other ISP network in step 2. In detail, the connections between the local ISP network and MPLS VPN gateway(s) are through IP, LAN, VLAN, or ATM PVC, for example, if the ISP network employs an Ethernet in networking, LAN/VLAN can be used; if the ISP network employs an ATM in networking, ATM PVC can be used; if the ISP network employs routers in networking, IP can be used. If the MPLS/BGP VPN services are to be provided across local ISP networks, the connection has to be established, and the connection should support both IP and MPLS capabilities at the same time. The MPLS VPN gateway of local ISP network is interconnected with the superior ISP network/other ISP device (supporting corresponding signaling and protocols between MPLS and MPLS/BGP VPN). Said device and the superior ISP network or/other ISP device connected uplink to the local ISP network in the conventional MPLS VPN can be the same device. If pluralities of MPLS VPN gateways are set, said connections can be independent/dependent. In step 3, the MPLS VPN gateway is connected to CE devices in the subscribers' network, and the connections between said MPLS VPN gateway and CE devices in the subscribers' network can be direct physical links (including Ethernet, Digital Data Network (DDN), ATM, etc), or CE devices in the subscribers' network can be connected to the original ISP network through direct physical links and then be connected to the MPLS VPN by using access ability of original network, comprising:
2-layer connection (Link at Link Layer): for example, subscribers' CE devices can be connected to the MPLS VPN gateway via ATM PVCs or LAN/VLAN in original ATM or LANSWITCH networks of the ISP.
3-layer connection (interconnections at Network Layer): for example, subscribers' CE devices can be connected to the MPLS VPN gateway with original tunnel technologies such as IP GRE, IPSEC, or L2TP in the ISP network.

Last, in step 4, corresponding functions on the MPLS VPN gateway are put into service to provide MPLS VPN services. For a MPLS VPN gateway, all access methods are identical to direct physical link connections; when a subscribers' CE device access the MPLS VPN gateway through various methods, corresponding functions are activated, which is configured similarly to a PE device; when the MPLS/BGP VPN services are provided across a plurality of ISP networks, the relationship between the MPLS VPN gateway of the local ISP network and the devices of other ISPs connected to the MPLS VPN gateway is identical to the "PE-P" relationship in the MPLS/BGP VPN networking model.

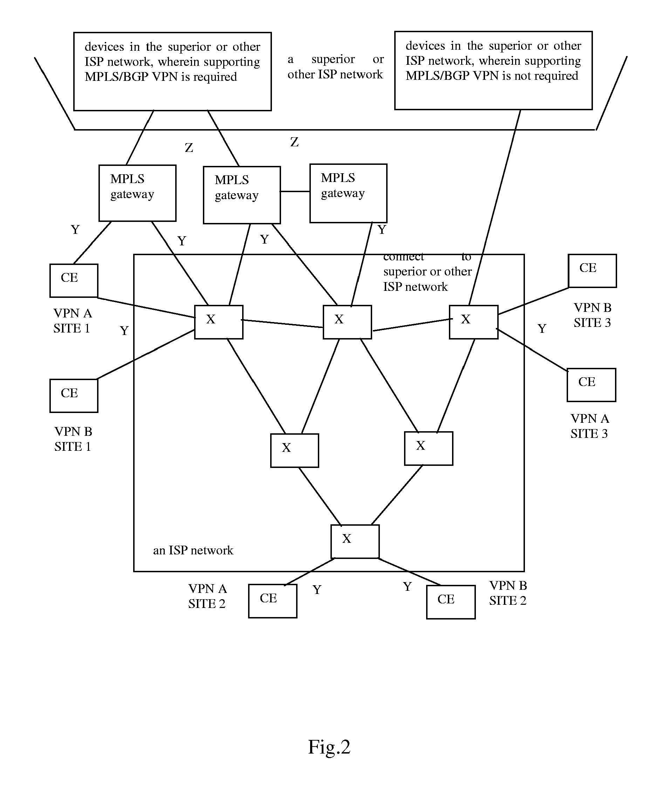

Referring to Fig.2, a network structure constructed according to the method in the present invention, wherein the MPLS VPN gateway can be a standard PE device (in Fig.2), which has rich access property to access to a CE device through various methods; the MPLS VPN gateways constitute the service plane of the network and are responsible for delivering MPLS/BGP VPN services. Wherein:
X represents a router, Ethernet switch, or ATM device, etc., which is not required to support any MPLS or MPLS/BGP VPN signaling or protocol; the MPLS VPN gateway-based method has no technical requirement for original network structure, which may be router networking, ATM switch networking, or Ethernet switch networking, etc. X devices constitute the data forwarding plane of the network and are responsible for user access and data forwarding.
Y represents a connection between a CE device, an ISP network device (X) and MPLS VPN gateway device, or a connection between an ISP networking deice (X) and a MPLS VPN gateway device. Y may represent various connections, including IP, LAN/VLAN, or ATM PVC.
Z represents a connection between MPLS VPN gateway devices or a connection between a MPLS VPN gateway device and a superior device or other ISP devices (supporting MPLS and MPLS/BGP VPN signaling and protocols), such a connection is required to support both IP and MPLS.

In Fig.2, the CE devices may be connected to MPLS VPN gateway devices in various methods, which comprise direct physical links, 2-layer (link on the Link Layer) and 3-layer (interconnections on Network Layer) methods. The MPLS VPN gateway are responsible for processing of MPLS/BGP VPN services in all local ISP networks and providing MPLS/BGP VPN traffic ability.

In consideration of MPLS/BGP VPN services to be provided across a plurality of ISP networks, the MPLS VPN gateway of current ISP network shall be interconnected with superior ISP or other ISP networks (supporting MPLS and MPLS/BGP VPN signaling and protocols). Said device and the superior ISP device or other ISP device connected uplink to the original local ISP network can be the same device. When MPLS/BGP VPN services are provided across a plurality of ISP networks, the relationship between the MPLS VPN gateway of the local ISP network and the devices of other ISPs connected to the MPLS VPN gateway is the PE-P relationship in the MPLS/BGP VPN networking module.

When MPLS/BGP VPN traffic increases, more MPLS VPN gateways can be added gradually in either of the following two ways: independent deployment: MPLS VPN gateways are independent to each other, and Y devices are used in downlink and Z devices are used in uplink; and dependent deployment: for newly added MPLS VPN gateways, Y devices are used in downlink, while conventional MPLS VPN gateway devices are connected in uplink via Z devices.

## Claims

1. A Multi Protocol Label Switching Virtual Private Network (MPLS VPN) gateway-based networking method, comprising:
step 1: setting one or more Multi Protocol Label Switching Virtual Private Network (MPLS VPN) gateways between a local Internet Service Provider (ISP) network and a superior Internet Service Provider (ISP) network/other Internet Service Provider (ISP) network;
step 2: connecting the Multi Protocol Label Switching Virtual Private Network (MPLS VPN) gateway with the local Internet Service Provider (ISP) network and the superior Internet Service Provider (ISP) network/other Internet Service Provider (ISP) network and connecting the Multi Protocol Label Switching Virtual Private Network (MPLS VPN) gateway with a Custom Edge Router (CE) device in the subscribers' network according to the network topology;
step 3: starting corresponding functions on the Multi Protocol Label Switching Virtual Private Network (MPLS VPN) gateway to provide Multi Protocol Label Switching Virtual Private Network (MPLS VPN) services.

2. A Multi Protocol Label Switching Virtual Private Network (MPLS VPN) gateway-based networking method of claim 1, wherein in step 1, said one or more Multi Protocol Label Switching Virtual Private Network (MPLS VPN) gateways being set according to the actual traffic of the Multi Protocol Label Switching Virtual Private Network (MPLS VPN) services.

3. A Multi Protocol Label Switching Virtual Private Network (MPLS VPN) gateway-based networking method of claim 2, wherein said Multi Protocol Label Switching Virtual Private Network (MPLS VPN) gateway is connected to the local Internet Service Provider (ISP) network via Internet Protocol (IP), Local Area Network (LAN), Virtual Local Area Network (VLAN), or Asynchronous Transfer Mode Permanent Virtual Connection (ATM PVC).

4. A Multi Protocol Label Switching Virtual Private Network (MPLS VPN) gateway-based networking method of claim 3, wherein The network connection between said Multi Protocol Label Switching Virtual Private Network (MPLS VPN) gateway and the superior Internet Service Provider (ISP) network/other network supports both Internet Protocol (IP) and Multi Protocol Label Switching (MPLS) protocols.

5. A Multi Protocol Label Switching Virtual Private Network (MPLS VPN) gateway-based networking method of claim 4, wherein the network connections between said Multi Protocol Label Switching Virtual Private Network (MPLS VPN) gateway and Custom Edge Router (CE) devices in the subscribers' network are directly connected by a physical links.

6. A Multi Protocol Label Switching Virtual Private Network (MPLS VPN) gateway-based networking method of claim 4, wherein said Multi Protocol Label Switching Virtual Private Network (MPLS VPN) gateway is connected to the Custom Edge Router (CE) devices in the subscribers' network by connecting directly the Custom Edge Router (CE) devices to the original Internet Service Provider (ISP) network by a physical link, and connecting the Custom Edge Router (CE) devices to said Multi Protocol Label Switching Virtual Private Network (MPLS VPN) via the original Internet Service Provider (ISP) network.

7. A Multi Protocol Label Switching Virtual Private Network (MPLS VPN) gateway-based networking method of claim 5 or 6, wherein said Multi Protocol Label Switching Virtual Private Network (MPLS VPN) gateway is connected to the Custom Edge Router (CE) devices in the subscribers' network by a physical link directly or a 2-layer or 3-layer connection implemented by the original Internet Service Provider (ISP) network.
